# EUROPÄISCHE PATENTSCHRIFT

(11) **EP 1 157 216 B1**
(45) Veröffentlichungstag und Bekanntmachung des Hinweises auf die Patenterteilung: **18.09.2002**
(21) Anmeldenummer: 99963219.3
(22) Anmeldetag: 12.11.1999
(51) Int. Cl.: F16B 12/42, A47B 17/00

(54) **VORRICHTUNG ZUM BEFESTIGEN VON GEGENSTÄNDEN AN SÄULEN**
DEVICE FOR FIXING OBJECTS TO COLUMNS
DISPOSITIF POUR FIXER DES OBJETS A DES MONTANTS

(30) Priorität: 04.03.1999 DE 29903921 U
(43) Veröffentlichungstag der Anmeldung: 28.11.2001
(73) Patentinhaber: Von der Mühlen, Günter, 58256 Ennepetal (DE)
(72) Erfinder: Von der Mühlen, Günter, 58256 Ennepetal (DE)
(74) Vertreter: Dörner, Lothar, Dipl.-Ing.
(86) Internationale Anmeldenummer: DE9903606
(87) Internationale Veröffentlichungsnummer: WO00052344

(56) Entgegenhaltungen:
- DE-A- 2 353 760
- FR-A- 1 299 884
- US-A- 3 640 498

## Beschreibung

Die Erfindung betrifft eine Vorrichtung zum Befestigen von Gegenständen an Säulen mit einem nach Art einer Schelle ausgebildeten Grundkörper, der einen Verschluß aufweist.

Die Befestigung von Gegenständen an insbesondere senkrecht stehenden Säulen stellt häufig ein Problem dar. So ist beispielsweise die Befestigung eines Regalbodens zwischen vier Säulen in der Regel nur dadurch möglich, daß in jede Säule in gleichmäßigem Abstand Bohrungen eingebracht sind, in die Halteelemente in Form von Stiften eingesteckt sind. Auf diese Stifte wird dann der Regalboden aufgesetzt. Dies weist den Nachteil auf, daß durch das Vorsehen von Bohrungen die Kosten für solche Säulen erhöht sind. Darüber hinaus ist die gleichmäßige Anordnung der Bohrungen in jeder Säule erforderlich, um einen paßgenauen Einbau eines Regalbodens unter Verwendung von vier Säulen zu ermöglichen. Weiterhin tritt das Problem auf, daß die Bohrungen üblicherweise entweder nur auf einer oder auf zwei Seiten der jeweiligen Säule vorgesehen sind. In diesem Fall sind die Bohrungen um 180° zueinander versetzt angeordnet. Dadurch ist die Einsatzmöglichkeit der Säulen beschränkt. Sind dagegen Bohrungen beispielsweise um 90° zueinander versetzt in der Säule vorgesehen, so sind die Kosten zusätzlich erhöht. Die genannten Probleme treten insbesondere beim Messe- oder Ladenbau auf, bei dem eine sehr flexible Möglichkeit zur Befestigung von Gegenständen gefordert ist. In Folge dessen sind für den Messebau besondere Konstruktionen entwickelt worden, die zwar flexibel sind, jedoch aufgrund der Verwendung von besonderen Teilen wie Kugelköpfen oder ähnlichem sehr hohe Kosten verursachen. Darüber hinaus ist noch zu berücksichtigen, daß insbesondere beim Messe- und Ladenbau auch die Anbringung von Gegenständen an horizontal angeordneten Säulen gefordert ist. Hierzu sind die mit Löchern versehenen Säulen ungeeignet, da die in die Löcher eingesetzten Stifte wenigstens beim Einsatz in den dem Boden zugewandten Löchern aus diesen herausfallen. Die geschilderte Problematik besteht darüber hinaus auch bei der Anbringung von Gegenständen an Tischbeinen. So ist es beispielsweise insbesondere an Schreibtischen häufig erwünscht, einen Sichtschutz zwischen den Tischbeinen anzubringen. Dies bedingt aber entweder Löcher in den Tischbeinen zur Befestigung des Sichtschutzes oder der Sichtschutz ist an der Tischplatte anzubringen, was jeweils aufwendig ist.

Eine Vorrichtung der eingangs genannten Art ist aus DE 23 53 760 A bekannt. Die Vorrichtung besteht aus einer Klemmhülse zum Verbinden rohrförmiger Teile. Die Klemmhülse ist aus zwei gleichen Halbschalen gebildet, die ineinandergreifen. Die Halbschalen sind mit Hilfe von zwei Klemmschrauben gehalten, die radial die Klemmhülse durchsetzen und an dem Rohr abgestützt sind. Am Außenrand der Halbschalen sind Verbindungen aus radial gerichteten Nuten und Federn möglich, die ineinandergreifen und längsverlaufende Schwalbenschwanz-Nuten zum Einsetzen von Verbindungsstücken aufweisen. Der Verschluss wird durch das Ineinandergreifen der Halbschalen in Verbindung mit den Klemmschrauben bewirkt. Die diametral versetzt angeordneten Schwalbenschwanz-Nuten beschränken den Einsatz von Verbindungselementen.

Hier will die Erfindung Abhilfe schaffen. Der Erfindung liegt die Aufgabe zugrunde, eine Vorrichtung zum Befestigen von Gegenständen zu schaffen, die einen flexiblen Anbau von Gegenständen ermöglicht und in der Handhabung einfach ist. Gemäß der Erfindung wird diese Aufgabe dadurch gelöst, daß der Grundkörper auf seiner der Säule abgewandten Seite Aufnahmen aufweist, an denen Verbindungselemente anbaubar sind, und auf seiner der Säule zugewandten Fläche mindestens abschnittsweise mit einer Beschichtung versehen ist.

Mit der Erfindung ist eine Vorrichtung zum Befestigen von Gegenständen geschaffen, die flexibel einsetzbar ist und deren Handhabung sehr einfach ist. Die Beschichtung verhindert ein Verrutschen des Grundkörpers auf der Säule selbst unter hoher Belastung. Damit ist die Möglichkeit geschaffen, dass die Vorrichtung genau an der vorgesehenen Anbauposition verharrt; es tritt kein Gleiten auf. Darüber hinaus ist die Vorrichtung in der Herstellung preiswert.

In Weiterbildung der Erfindung bestehen die Aufnahmen aus Nuten. Durch diese Ausgestaltung ist einerseits eine einfache Handhabung gewährleistet, andererseits sind dadurch die Abmessungen des Grundkörpers gering gehalten.

Vorteilhaft weisen die Verbindungselemente auf ihrer dem Grundkörper zugewandten Seite eine mit den Nuten korrespondierende Form auf. Hierdurch ist ein paßgenauer Sitz der Verbindungselemente auf dem Grundkörper ermöglicht.

In vorteilhafter Weiterbildung sind die Nuten sich verjüngend ausgebildet. In senkrechter Lage der Nuten erfolgt für diese Ausbildung der Anbau der Grundkörper mit dem verjüngten Bereich der Nute auf der dem Boden zugewandten Seite. Hierdurch ist gewährleistet, daß beim Aufschieben der Verbindungselemente von der weitesten Seite der Nute her aufgrund der Verjüngung der Nute eine erhöhte Paßgenauigkeit sowie ein Schutz gegen Herunterfallen der Verbindungselemente gegeben ist.

Bevorzugt ist an einem Ende der Nute ein Bund vorgesehen. Mit Hilfe des Bundes ist die Möglichkeit eines Herunterfallens der Verbindungselemente ausgeschlossen.

In vorteilhafter Ausgestaltung der Erfindung ist der Verschluß in Form eines Drehknopfes ausgebildet. Diese Art des Verschlusses ermöglicht eine besonders einfache Handhabung.

Bevorzugt ist im Bereich des Verschlusses auf dem Grundkörper eine Nase vorgesehen. Mit Hilfe der Nase ist ein Anschlag geschaffen, der ein Drehen des Drehknopfes in die falsche Richtung verhindert.

Ein Ausführungsbeispiel der Erfindung ist in der Zeichnung dargestellt und wird nachfolgend im einzelnen beschrieben. Es zeigen:
- Fig. 1: eine perspektivische Darstellung einer Vorrichtung in an einer Säule angebautem Zustand mit Verbindungselement und einem davon aufgenommenen Gegenstand;
- Fig. 2: die Ansicht eines Grundkörpers;
- Fig. 3: die Draufsicht auf den in Figur 2 dargestellten Grundkörper;
- Fig. 4: die Darstellung des in Figur 2 dargestellten Grundkörpers im Schnitt entlang der Linie IV-IV in Figur 3;

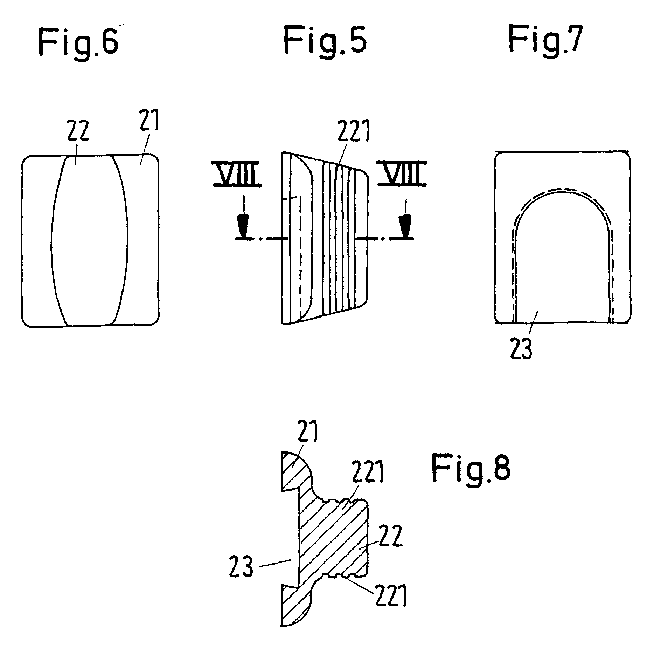

- Fig. 5: die Ansicht eines Drehknopfes;
- Fig. 6: die Seitenansicht von rechts des in Figur 5 dargestellten Drehknopfes;
- Fig. 7: die Seitenansicht von links des in Figur 5 dargestellten Drehknopfes;
- Fig. 8: die Darstellung des Drehknopfes im Schnitt entlang der Linie VIII-VIII in Figur 5;
- Fig. 9: die Draufsicht auf ein Verbindungselement;
- Fig. 10: die Darstellung des in Figur 9 dargestellten Verbindungselementes im Schnitt entlang der Längsmittellinie;
- Fig. 11: die Draufsicht auf ein Verbindungselement in einer anderen Ausbildung;
- Fig. 12: die Darstellung des in Figur 11 dargestellten Verbindungselementes im Schnitt entlang der Längsmittellinie;
- Fig. 13: die Draufsicht auf ein Verbindungselement in einer weiteren Ausbildung;
- Fig. 14: die Darstellung des in Figur 13 dargestellten Verbindungselementes im Schnitt entlang der Längsmittellinie;
- Fig. 15: die Draufsicht auf ein Verbindungselement in einer anderen Ausgestaltung;
- Fig. 16: die Darstellung des in Figur 15 dargestellten Verbindungselementes im Schnitt entlang der Längsmittellinie;
- Fig. 17: die Draufsicht auf ein Verbindungselement in einer anderen Ausbildung;
- Fig. 18: die Darstellung des in Figur 17 dargestellten Verbindungselementes im Schnitt entlang der Längsmittellinie;
- Fig. 19: eine perspektivische Darstellung eines Verbindungselementes zur Aufnahme eines festen Tragarmes;
- Fig. 20: eine perspektivische Darstellung eines festen Tragarmes;
- Fig. 21: eine perspektivische Darstellung eines Verbindungselementes zur Aufnahme eines schwenkbaren Tragarmes und
- Fig. 22: eine perspektivische Darstellung eines schwenkbaren Tragarmes.

Die als Ausführungsbeispiel gewählte Vorrichtung zum Befestigen von Gegenständen an Säulen besteht im wesentlichem aus einem Grundkörper 1, der einen Verschluß 2 aufweist. Der Grundkörper 1 weist auf seiner der Säule abgewandten Seite Aufnahmen 3 auf, an denen Verbindungselemente 4 anbaubar sind.

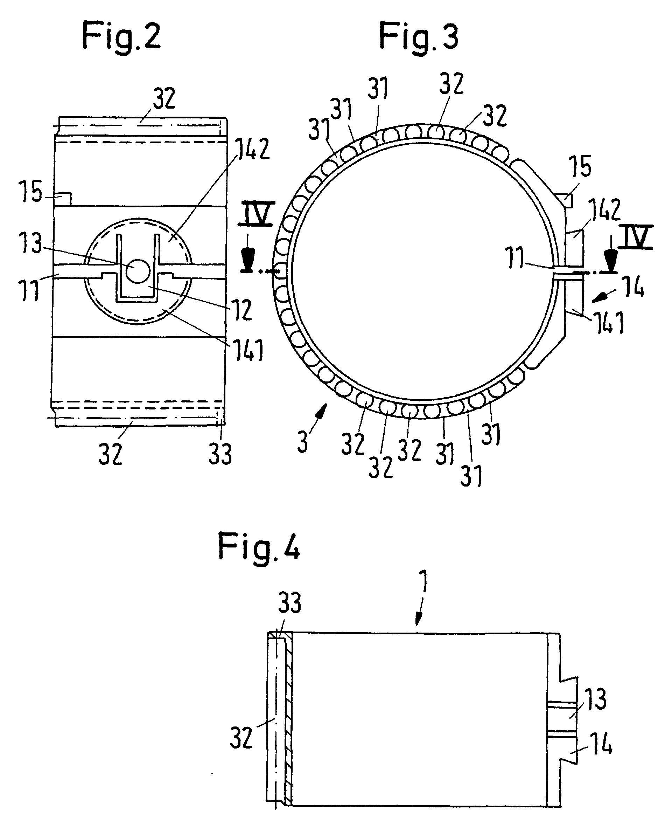

Der Grundkörper 1 ist nach Art einer Schelle ausgebildet. Er weist in der Draufsicht einen im wesentlichen ringförmigen Querschnitt auf. Der Querschnitt des Grundkörpers 1 kann jedoch auch in jeder beliebigen anderen Form wie beispielsweise drei-, vier- oder mehreckig sowie oval, beziehungsweise in jeder beliebigen anderen Form ausgebildet sein. Die Form des Grundkörpers 1 ist abhängig von der Form der Säule, an der der jeweilige Grundkörper befestigt werden soll. Der Grundkörper 1 ist im Ausführungsbeispiel aus Kunststoff hergestellt. Er ist mit einem vertikalen Spalt 11 versehen. Im Bereich des Spaltes 11 ist auf der Außenseite eine Möglichkeit zum Befestigen des Verschlusses 2 vorgesehen. Im Ausführungsbeispiel besteht diese Möglichkeit aus einer Lasche 12, in der ein Loch 13 vorgesehen ist. Das Loch 13 dient zur Aufnahme eines - nicht dargestellten - Bolzens. Koaxial zu dem Loch 13 ist auf dem Grundkörper 1 ein Knopf 14 angeformt, der aufgrund des Spaltes 11 in zwei Teile 141 und 142 aufgeteilt ausgebildet ist. Der Knopf 14 ist im Ausführungsbeispiel in Form eines Kegelstumpfes ausgebildet. Das durchmesserkleine Ende des Stumpfes ist dabei auf der dem Grundkörper 1 zugewandten Seite vorgesehen - Figuren 3 und 4 -. Im Abstand zu dem Knopf 14 ist an dem Grundkörper 1 eine Nase 15 vorgesehen. Auf der der Säule zugewandten Fläche - Innenfläche - ist der Grundkörper 1 mit einer Beschichtung versehen. Es handelt sich hierbei um eine Anti-Rutsch-Beschichtung, mit deren Hilfe ein Verrutschen des Grundkörpers 1 auf einer Säule wirksam verhindert ist. Die Beschichtung kann auch nur abschnittsweise auf der Innenfläche vorgesehen sein. Auch ist es möglich, die Beschichtung mit Hilfe eines Klebebandes zu verwirklichen.

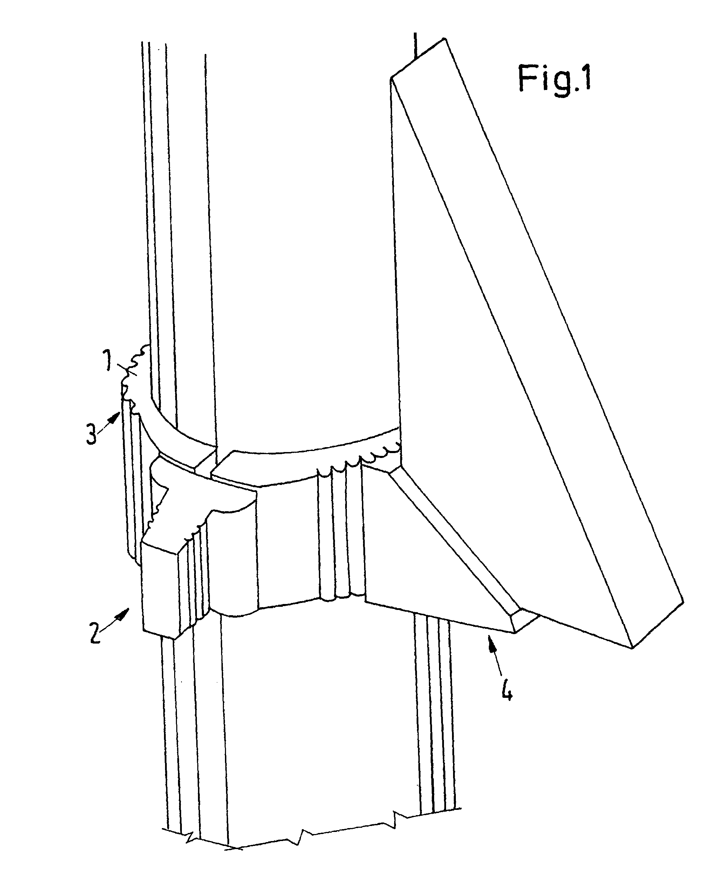

Der Verschluß 2 besteht im Ausführungsbeispiel aus einem Drehknopf. Der Drehknopf ist von einem Unterbau 21 gebildet, von dem aus sich ein Griff 22 erhebt. Der Griff 22 ist rechtwinklig zum Unterbau 21 angeordnet. An seinen Längsseiten weist der Griff 22 eine Riffelung 221 auf, um beim Betätigen des Verschlusses ein Abrutschen zu verhindern. Auf seiner dem Griff 22 abgewandten Seite ist in dem Unterbau 21 ein U-förmiger Einschnitt 23 ausgebildet. Die Seitenwände des Einschnitts 23 sind schwalbenschwanzförmig ausgebildet. Seine Breite entspricht im wesentlichen dem Durchmesser des Knopfes 14 auf dem Grundkörper 1. Der Verschluß 2/der Drehknopf ist mit Hilfe des Bolzens, der in dem Loch 13 auf dem Grundkörper 1 angeordnet ist, auf dem Grundkörper 1 drehbar befestigt. In geschlossener Position des Verschlusses ist der Griff 22 parallel zur Längsmittellinie der jeweiligen Säule, an der die Vorrichtung angebaut ist, ausgerichtet - Figur 1 -. In geöffneter Position ist der Griff dagegen rechtwinklig zur Längsmittellinie der Säule ausgerichtet. In geöffneter Position ist aufgrund des einseitig offenen Einschnittes 23 ein Aufklappen des Grundkörpers 1 möglich. Der Verschluß 2 gibt beim Aufklappen den Teil 141 des Knopfes 14 frei. Die Vorrichtung kann dann von der jeweiligen Säule entfernt werden. Der Grundkörper 1 ist zur besseren Entfernung der Vorrichtung von einer Säule unter Verwendung eines Materials herstellbar, welches die Spreizung des Grundkörpers 1 entlang des Spaltes 11 in einer Größenordnung ermöglicht, die dem Durchmesser der jeweiligen Säule entspricht. Die Vorrichtung kann in diesem Fall rechtwinklig zur Längsmittellinie der jeweiligen Säule von dieser abgezogen werden. Beim Drehen des Verschlusses um den Bolzen stößt der Verschluß 2 mit seinem Unterbau 21 an die auf dem Grundkörper 1 vorgesehene Nase 15. Die geschieht sowohl bei Erreichen der Position "offen" als auch bei Erreichen der Position "geschlossen". Hierdurch ist gewährleistet, beim Öffnen und Schließen der Vorrichtung nicht in die falsche Richtung gedreht werden kann, was zu einer Vereinfachung der Bedienung beiträgt.

Die Aufnahmen 3 auf dem Grundkörper 1 bestehen aus Nuten 31, die im wesentlichen parallel zur Längsmittellinie der Säulen auf dem Grundkörper angeordnet sind. Die Nuten 31 sind durch an dem Grundkörper 1 angeformte Stäbe 32 gebildet. Die Stäbe 32 weisen in der Draufsicht - Figur 3 - eine annähernd kreisförmige Ausgestaltung auf und sind konisch ausgebildet - Figuren 2 und 4 -; die Nute 31 verjüngen sich infolge dessen zu ihrem einen Ende hin. In der Ansicht haben die Nute 31 somit eine leicht V-förmige Ausgestaltung. Beim Anbau an eine senkrecht stehende Säule vergrößert sich der Durchmesser der Stäbe in Richtung der dem Boden zugewandten Seite der Stäbe - Figur 2 -. An dem dem Boden zugewandten Ende ist an dem Grundkörper 1 ein Bund 33 vorgesehen, der ein Herunterfallen der Verbindungselemente verhindert. In Abwandlung des Ausführungsbeispiels ist darüber hinaus möglich, an jeder Nut 31 einen Bund separat vorzusehen.

Die Verbindungselemente 4 bestehen aus einem Körper 41, der auf seiner dem Grundkörper 1 zugewandten Seite eine mit der Form des Grundkörpers 1 sowie den Aufnahmen 3 korrespondierende Form aufweist. Im Ausführungsbeispiel hat dies zur Folge, daß die Körper 41 auf ihrer dem Grundkörper 1 zugewandten Seite eine kreisbogenartige Form aufweisen. Darüber hinaus sind die Körper 41 mit Aussparungen 42 versehen, deren Querschnitt dem Querschnitt der Stäbe 32 entspricht. Sie sind ebenfalls leicht konisch ausgebildet. Die dem Grundkörper zugewandte Seite der Verbindungselemente stellt somit das Negativ zu den an dem Grundkörper 1 vorgesehenen Aufnahmen 3 dar. Somit ist ein passgenauer Sitz der Verbindungselemente auf dem Grundkörper ermöglicht. An einem Ende ist auf der dem Grundkörper 1 zugewandten Seite jeweils ein Bund 46 vorgesehen.

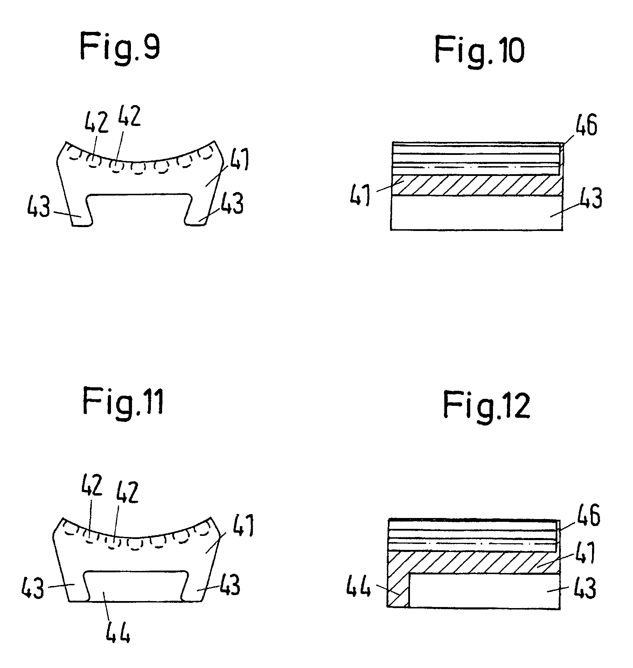

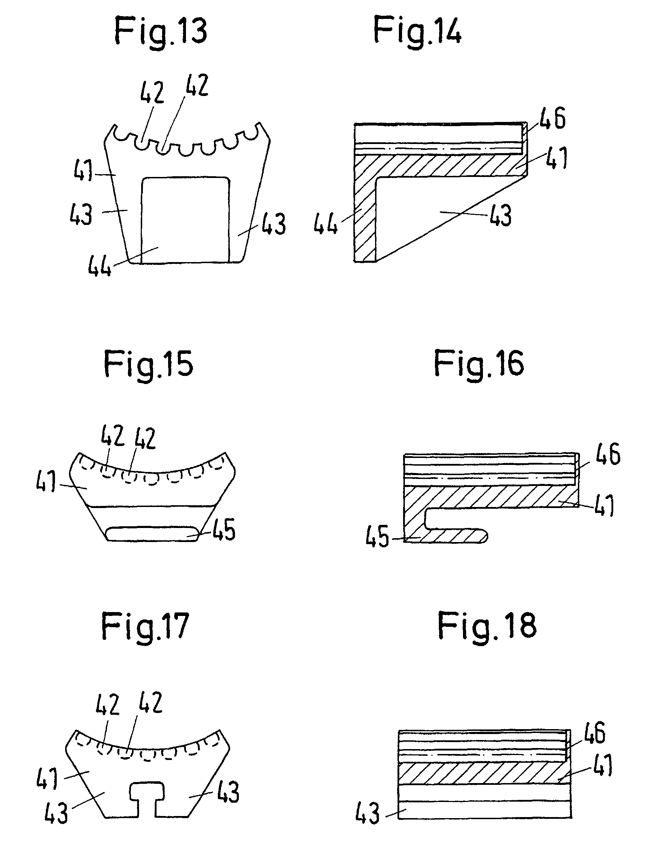

Die Verbindungselemente 4 sind in vielfältiger Form ausführbar, wie dies die Beispiele nach den Figuren 9 bis 18 belegen. Die Ausbildung ist im wesentlichen abhängig vom jeweiligen Einsatzzweck. Üblicherweise sind die Verbindungselemente 4 auf ihrer dem Grundkörper 1 abgewandten Seite mit Schenkeln 43 versehen. Die einander zugewandten Seiten der Schenkel 43 können verschiedene Ausbildungen haben. So sind beispielsweise die einander zugewandten Seiten der Schenkel 43 in den Ausführungsbeispielen nach den Figuren 9 bis 12 schwalbenschwanzförmig ausgeführt. Im Ausführungsbeispiel nach den Figuren 17 und 18 ist dagegen eine in der Draufsicht T-förmige Ausbildung dargestellt. Die vorgenannten Ausbildungen eignen sich insbesondere zur Befestigung von hängenden Gegenständen. Hierzu findet bevorzugt eine Anbindung an die Verbindungselemente mit Hilfe von an dem Gegenstand angeordneten Elementen statt, die mit der zwischen den Schenkeln 43 ausgebildeten Form korrespondieren.

Im Ausführungsbeispiel nach den Figuren 13 und 14 sind die Schenkel 43 auf ihrer einander zugewandten Seite parallel zueinander ausgeführt. Diese Ausbildung eignet sich insbesondere zur Befestigung von Platten oder anderen plattenförmigen Gegenständen. Bei dem Ausführungsbeispiel nach Figuren 13 und 14 sind die Schenkel 43 in der Seitenansicht dreieck-förmig ausgebildet. Die Einbaulage des Verbindungselements nach den Figuren 13 und 14 ist aus Figur 1 ersichtlich. Hierbei handelt es sich um eine senkrecht angeordnete Säule, an der eine ebenfalls senkrecht ausgerichtete Platte angeordnet ist. Hierzu ist an dem Verbindungselement an seinem dem Boden zugewandten Ende ein Boden 44 zwischen den Schenkeln 43 vorgesehen. Der Boden 44 ermöglicht das Hineinstellen der Platte, wie dies im Ausführungsbeispiel nach Figur 1 dargestellt ist. Auch das Verbindungselement nach den Figuren 11 und 12 weist einen solchen Boden 44 auf. Das Ausführungsbeispiel nach den Figuren 9 und 10 zeigt das in Figur 11 und 12 dargestellte Verbindungselement ohne einen solchen Boden. Die Auswahl verschiedener Verbindungselemente zeigt, daß bei allen mit Schenkeln 43 ausgestatteten Verbindungselementen 4 ein Boden 44 vorsehbar ist.

Das Ausführungsbeispiel nach den Figuren 15 und 16 zeigt ein weiteres Verbindungselement in einer anderen Ausbildung. Dieses Verbindungselement weist keine Schenkel auf. Vielmehr weist es auf seiner der Säule abgewandten Seite einen Haken 45 auf. Mit Hilfe des Hakens 45 sind Gegenstände an den Verbindungselementen aufhängbar. Außerdem besteht die Möglichkeit, eine Wand geringer Dicke in den Haken 45 hinein zu stellen.

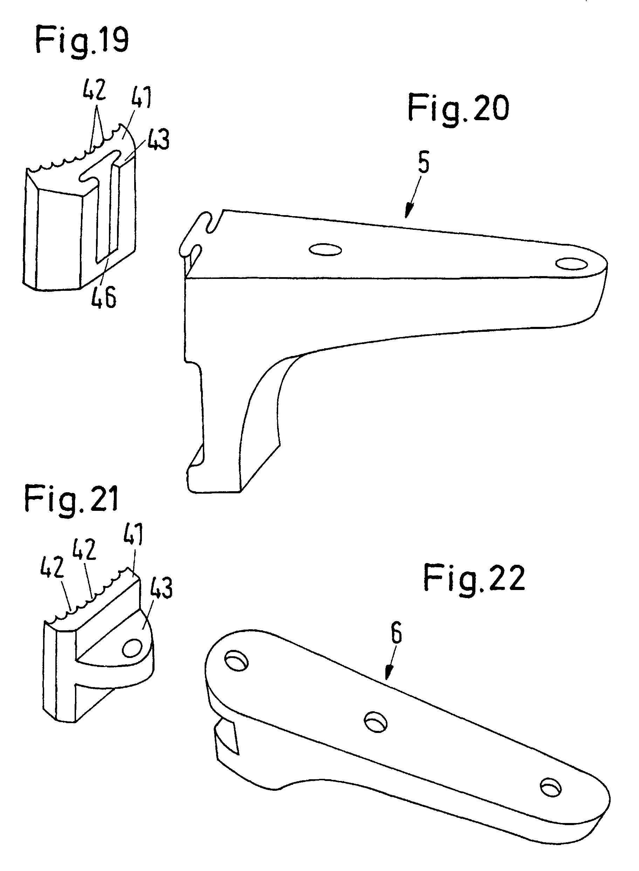

Die Ausführungsbeispiele nach den Figuren 19 bis 22 zeigen weitere Verbindungselemente, welche zur Aufnahme von festen Tragarmen 5 beziehungsweise schwenkbaren Tragarmen 6 dienen. Diese finden Verwendung für die Montage von festen beziehungsweise schwenkbaren Regalböden, Tischplatten oder ähnlichem.

Die erfindungsgemäße Vorrichtung ist keineswegs auf die genannten Einsatzgebiete beschränkt. Sie ist vielmehr überall dort einsetzbar, wo Gegenstände, Schilder, Tischplatten, Trennwände o.ä. an Säulen angeordnet werden sollen.

## Patentansprüche

1. Vorrichtung zum Befestigen von Gegenständen an Säulen mit einem nach Art einer Schelle ausgebildeten Grundkörper, der einen Verschluß aufweist, und der Grundkörper (1) weist auf seiner der Säule abgewandten Seite Aufnahmen (3) auf, an denen Verbindungselemente (4) anbaubar sind, **dadurch gekennzeichnet daß** der Grundkörper auf seiner der Säule zugewandten Fläche mindestens abschnittsweise mit einer Beschichtung versehen ist, um ein Verrutschen auf der Säule zu verhindern.

2. Vorrichtung nach Anspruch 1, **dadurch gekennzeichnet, daß** die Aufnahmen (3) aus Nuten (31) bestehen.

3. Vorrichtung nach Anspruch 2, **dadurch gekennzeichnet, daß** die Nute (31) im wesentlichen parallel zur Längsmittellinie der Säulen angeordnet sind.

4. Vorrichtung nach einem der Ansprüche 1 bis 3, **dadurch gekennzeichnet, daß** die Verbindungselemente (4) auf ihrer dem Grundkörper (1) zugewandten Seite eine mit der Form des Grundkörpers (1) korrespondierende Form aufweisen.

5. Vorrichtung nach einem der Ansprüche 2 bis 4, **dadurch gekennzeichnet, daß** die Nute (31) sich verjüngend ausgebildet sind.

6. Vorrichtung nach einem der Ansprüche 2 bis 5, **dadurch gekennzeichnet, daß** an dem einen Ende der Nuten (31) ein Bund (33) vorgesehen ist.

7. Vorrichtung nach einem der Ansprüche 1 bis 6, **dadurch gekennzeichnet, daß** an den Verbindungselementen (4) auf ihrer dem Grundkörper (1) zugewandten Seite an einem Ende ein Bund (46) vorgesehen ist.

8. Vorrichtung nach einem der Ansprüche 1 bis 7, **dadurch gekennzeichnet, daß** der Verschluß (2) in Form eines Drehknopfes ausgebildet ist.

9. Vorrichtung nach einem der Ansprüche 1 bis 8, **dadurch gekennzeichnet, daß** im Bereich des Verschlusses (3) auf dem Grundkörper (1) eine Nase (15) vorgesehen ist.

## Claims

1. A device for fixing objects to columns, having a base body, which is constructed in the manner of a clamp and has a closure, the base body (1) having, on its side remote from the column, receiving means (3) on which connection elements (4) can be mounted, **characterised in that** the base body is provided with a coating on at least portions of its face facing the column, in order to prevent it slipping along the column.

2. A device according to Claim 1, **characterised in that** the receiving means (3) comprise grooves (31).

3. A device according to Claim 2, **characterised in that** the grooves (31) are arranged substantially parallel to the longitudinal centre line of the columns.

4. A device according to one of Claims 1 to 3, **characterised in that** the connection elements (4) have, on their side facing the base body (1), a shape corresponding to the shape of the base body (1).

5. A device according to one of Claims 2 to 4, **characterised in that** the grooves (31) have a tapered construction.

6. A device according to one of Claims 2 to 5, **characterised in that** a collar (33) is provided at one end of the grooves (31).

7. A device according to one of Claims 1 to 6, **characterised in that** a collar (46) is provided at one end of the connection elements (4), on their side facing the base body (1).

8. A device according to one of Claims 1 to 7, **characterised in that** the closure (2) is constructed in the form of a turning knob.

9. A device according to one of Claims 1 to 8, **characterised in that** a lug (15) is provided on the base body (1), in the region of the closure (3).

## Revendications

1. Dispositif pour fixer des objets sur des colonnes comportant un corps de base conformé à la manière d'un collier de serrage, qui présente une fermeture et le corps de base (1) comporte sur son côté éloigné de la colonne des logements (3) sur lesquels peuvent être montés des éléments d'assemblage (4), **caractérisé en ce que** le corps de base est pourvu sur sa face orientée vers la colonne, au moins par segments, d'un revêtement pour empêcher un glissement sur la colonne.

2. Dispositif selon la revendication 1, **caractérisé en ce que** les logements (3) sont constitués de rainures (31).

3. Dispositif selon la revendication 2, **caractérisé en ce que** les rainures (31) sont disposées sensiblement parallèlement à la ligne médiane longitudinale des colonnes.

4. Dispositif selon l'une des revendications 1 à 3, **caractérisé en ce que** les éléments d'assemblage (4) présentent sur leur côté orienté vers le corps de base (1) une forme correspondant à la forme du corps de base (1).

5. Dispositif selon l'une des revendications 2 à 4, **caractérisé en ce que** les rainures (31) sont conformées se rétrécissant.

6. Dispositif selon l'une des revendications 2 à 5, **caractérisé en ce qu'**un épaulement (33) est prévu à une extrémité des rainures (31).

7. Dispositif selon l'une des revendications 1 à 6, **caractérisé en ce que** sur les éléments d'assemblage (4) sur leur côté orienté vers le corps de base (1) est prévu à une extrémité un épaulement (46).

8. Dispositif selon l'une des revendications 1 à 7, **caractérisé en ce que** la fermeture (2) est configurée en forme de bouton rotatif.

9. Dispositif selon l'une des revendications 1 à 8, **caractérisé en ce qu'**un ergot (15) est prévu sur le corps de base (1) dans la zone de la fermeture (3).
